# EUROPÄISCHE PATENTANMELDUNG

(11) **EP 1 870 446 A1**
(43) Veröffentlichungstag der Anmeldung: **26.12.2007**
(21) Anmeldenummer: 07011544.9
(22) Anmeldetag: 13.06.2007
(51) Int. Cl.: C11C 3/00, C10L 1/02, B01J 27/24

(54) **Verfahren zur Umesterung von Triglyceriden**

(30) Priorität: 22.06.2006 DE 102006028560
(71) Anmelder: Cognis IP Management GmbH, 40589 Düsseldorf (DE)
(72) Erfinder: Huesken, Hendrik, 45721 Haltern am See (DE); Gutsche, Bernhard, 40724 Hilden (DE); Richter, Joachim, 40227 Düsseldorf (DE)

(57) **Zusammenfassung**

Vorgeschlagen wird ein Verfahren zur Umesterung von Triglyceriden mit einwertigen Alkoholen, wobei die Umsetzung durchgeführt wird in Gegenwart (a) eines basischen Aktivators und (b) eines Phasentransfer-Katalysators, der ausgewählt wird aus der Gruppe der Benzyltrialkylammoniumsalze und der Trisalkylmethylammoniumsalze der Formel (III)

[NR⁵R⁶R⁷CH₃]+ [X]- (III)

worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und X ein Anion bedeutet; dabei gilt die Maßgabe, dass die Verbindungen (a) verschieden sind von den Verbindungen (b) und die weitere Maßgabe, dass die eingesetzten Triglyceride eine Säurezahl unterhalb von 4 aufweisen.

## Beschreibung

### Gebiet der Erfindung

Die Erfindung betrifft ein Verfahren zur Herstellung von Fettsäurealkylestern aus Triglyceriden, insbesondere Fetten und Ölen natürlichen Ursprungs, durch Umesterung von Triglyceriden mit einwertigen Alkoholen in Gegenwart von basischen Aktivatoren und speziellen Phasentransfer-Katalysatoren.

### Stand der Technik

Umesterungsreaktionen sind eine kommerziell bedeutsame Klasse industrieller organischer Reaktionen. Bei einer Umesterungsreaktion wird ein Ester durch Austausch der Säuregruppen oder durch Austausch der alkoholischen Gruppen in einen anderen Ester überführt. Erfolgt die Umesterung durch Austausch der alkoholischen Gruppen, so spricht man auch von einer Alkoholyse. Bei der Alkoholyse wird der auszutauschende Alkohol in der Regel im Überschuss zugesetzt, um eine hohe Ausbeute an gewünschtem Ester zu erhalten. Die Umesterung ist eine Gleichgewichtsreaktion, die in der Regel bereits durch Mischen der Reaktanden ausgelöst wird. Die Reaktion verläuft jedoch so langsam, dass für kommerzielle Zwecke ein Katalysator zur Beschleunigung der Reaktion erforderlich ist.

In neuerer Zeit hat die Herstellung von Fettsäurealkylestern, insbesondere von Methyl- und Ethylestern, aus vegetabilen Ölen (z.B. Rapsöl, Sojaöl) im Zusammenhang mit der Erzeugung von Dieselkraftstoff aus nachwachsenden Rohstoffen erheblich an Aktualität gewonnen. Man spricht hier von "Biodiesel". Die eingesetzten Fette und Öle biologischen Ursprungs bestehen überwiegend aus Glyceriden (Mono-, Di- und Triglycerid), daher wird als Nebenprodukt der Alkoholyse Glyzerin gewonnen.

In der Praxis wird häufig das Bradshaw-Verfahren zur Umesterung von Fetten und Ölen mit Methanol (beschrieben in den US-Patenten 2,271,619 und 2,360,844) angewandt. Die Reaktion wird in einem offenen Behälter, der aus gewöhnlichem Kohlenstoffstahl bestehen kann, durchgeführt. Hierbei wird das Fett oder Öl bei der Siedetemperatur des Reaktionsgemisches mit einem Überschuss an 99,7%-igem Methanol in Gegenwart von 0,1 bis 0,5% Natriumhydroxid gerührt. Beim ruhigen Stehen scheidet sich das entstandene Glycerin praktisch wasserfrei am Boden des Gefäßes ab. Erst nach einer Stunde ist in der Regel ein Umsatz von 98% erreicht. Das Fett oder Öl sollte für dieses Verfahren trocken (wasserfrei), sauber und im optimalen Fall neutral sein. Andernfalls können aus den Fettsäuren Seifen gebildet werden.

Werden bei der Umesterung von Triglyceriden mit Methanol und Ethanol Natrium- und Kaliumverbindungen als Katalysator verwendet, so treten verschiedene Probleme auf. Nach der teilweise erfolgten Umesterungsreaktion beginnt das erzeugte Glycerin, eine neue Phase zu bilden. Die Natrium- und Kaliumverbindungen als Katalysator sind in der Glycerinphase sehr gut löslich und verarmen entsprechend im Reaktionsgemisch. Deswegen und wegen der im Laufe der Reaktion gebildeten Emulsion schreitet die Reaktion schließlich nur langsam voran. Aus diesem Grunde wird häufig nach etwa einer halben Stunde die Reaktion unterbrochen und das gebildete Glycerin abgetrennt. Danach wird neuer Katalysator zugesetzt und die Reaktion eine weitere halbe Stunde fortgesetzt. Auf diese recht umständliche und zeitaufwändige Weise wird ein Umsatz von etwa 98% erhalten. In der Esterphase verbleiben nach der Phasentrennung noch sehr feine Glycerintröpfchen suspendiert. Das Glycerin und der in beiden Phasen verteilte Katalysator müssen aus der Esterphase nach Abschluss der Reaktion entfernt werden. Je nach der weiteren Verwendung des Glycerins ist es darüber hinaus notwendig, den gelösten Katalysator auch aus der Glycerinphase zu entfernen. Um die genannten Probleme zu vermeiden und gleichzeitig die Reaktionszeit abzukürzen, sind im Stand der Technik verschiedene Vorschläge gemacht worden.

In der deutschen Offenlegungsschrift DE 3421217 A1 wird ein Verfahren zur Herstellung von Fettsäureestern kurzkettiger, primärer und sekundärer Alkohole mit 1 bis 5 Kohlenstoffatomen durch Umesterung von Glyceriden beschrieben. Dabei wird durch die flüssigen Glyceride bei Temperaturen zwischen 230 und 270 °C ein Strom des gasförmigen Alkohols hindurchgeleitet. Mit diesem Strom wird ein Produktionsgemisch aus Glycerin und Fettsäurealkylester aus der Reaktionszone ausgetragen und anschließend getrennt. Als Katalysator ist Alkali in den flüssigen Glyceriden des Reaktionsgefäßes gelöst.
Gemäß dem in DE 198 03 053 C1 beschriebenen Verfahren werden Triglyceride in Gegenwart von geeigneten Katalysatoren, wie beispielsweise Zinkseifen, vorzugsweise in Gleichstromkolonnen bei Temperaturen von 200 bis 240 °C und bei Drucken bis zu 90 bar mit Alkohol im mehrfach molaren Überschuss umgesetzt. Nach der Abtrennung des überschüssigen Alkohols werden Alkylester-Glycerin-Gemische erhalten, die in einem Separator in die leichtere organische Phase und in die Glycerinphase getrennt werden. An diese Phasentrennung schließt sich eine weitere Aufarbeitung und Reinigung der Produkte an. Die Esterphase wird mit Wasser gewaschen, um die im Produkt gelösten Glycerinreste zu entfernen. Dabei werden auch etwa 40% der im Ester gelösten Zinkseifen in Form von Zinkhydroxid ausgewaschen.

Ferner wurden schon früher Untersuchungen mit dem Ziel angestellt, die katalytisch aktiven Natrium- und Kaliumverbindungen durch basische Ammoniumverbindungen zu ersetzen. Untersucht wurde im Hinblick auf ihre Eignung als Katalysatoren für die Alkoholyse von Fetten und Ölen die Aktivität zahlreicher Basen, z. B. Amine. In diesem Zusammenhang wurden Guanidine als geeignete Katalysatoren beschrieben. Ein Vorteil, den Guanidine bei der Umesterung von Fetten und Ölen als Katalysatoren bieten, besteht in der Möglichkeit, sie auf organischen Polymeren zu binden. Die Herstellung von heterogenen Katalysatoren durch Bindung von Guanidinen an verschiedenen Polymeren und deren Eignung für die Katalyse der Umesterung von vegetabilischen Fetten und Ölen sind beispielsweise in dem brasilianischen Patent BR 8202429 (1984, Erfinder: U. Schuchardt und O.G. Lopes) beschrieben.
WO 2004/031119 beschreibt die Verwendung von basischen Katalysatoren ausgewählt aus Iminoverbindungen, Alkylguanidinen, Butylamin, quaternären Aminen und tertiären Aminen, die eine zusätzliche OH-Gruppe oder NH₂-Gruppe tragen. In Beispiel 20 werden Rapsöl und Methanol in Gegenwart von Tetramethylammoniumhydroxid umgesetzt.
DE 10 2004 044 660 A1 beschreibt die Verwendung von Guanidinium-Carbonat als Katalysator zur Umesterung von Fetten und Ölen biologischen Ursprungs mit einwertigen Alkoholen.
Gemäß WO 01/12581 wird vorgeschlagen, in einem ersten Schritt eine Entsäuerung des pflanzlichen Öles oder Fettes durch Umsetzung der freien Fettsäuren mit Methanol und Schwefelsäure als Katalysator vorzunehmen. Nach der Neutralisation soll in einem zweiten Schritt die Umesterung unter Verwendung von Alkali (NaOH, KOH) stattfinden. Bei dem zweiten Schritt wird dem Reaktionsgemisch soviel an einem Co-Solvens zugemischt, dass das Reaktionsgemisch einphasig wird. Dadurch wird die Reaktionsgeschwindigkeit erheblich erhöht.
DE 2110213 A1 beschreibt die Herstellung von Diglyceriden, durch Umsetzung von Fettsäureglycidylestern - insbesondere Glycidylstearat und Glycidylpalmitat - mit Fettsäuren in Gegenwart von Oniumsalzen, etwa quaternären Ammoniumsalzen.
EP 1,526,126 A1 beschreibt ein Verfahren zur Herstellung konjugierter, mehrfach ungesättigter Fettsäureester in Gegenwart von Phasentransferkatalysatoren. Hierbei handelt es sich jedoch nicht um Umesterungen sondern um die Isomerisierung. Denn die Einsatzstoffe sind Fettsäuremethylester mit isolierten Doppelbindungen und die Produkte sind Fettsäuremethylester mit konjugierten Doppelbindungen. Es geht mithin in dieser Schrift nicht um die Herstellung von Biodiesel.

WO 03/066,567 A1 beschreibt ein Verfahren zur Herstellung von Fettsäurealkylestern hoher Reinheit, wobei in einem ersten Schritt Fette und/oder Öle mit einem niederen Alkohol in Gegenwart eines basischen Katalysators gemischt werden, wobei eine einheitliche Phase entsteht. Diese Mischung wird in einem Schritt kontinuierlich in einem tubulären Reaktor umgeestert, wobei die einheitliche Phase aufrechterhalten wird. Kennzeichnend für die technische Lehre dieser Schrift ist mithin die Einphasigkeit bei der Reaktionsführung. Für die notwendigen alkalischen Katalysatoren wird eine Vielzahl von Beispielen genannt (vergl. den die Seiten 7/8 überbrückenden Absatz). Als singuläres Beispiel ist auch Tetrabutylammoniumhydroxid als Katalysator aufgelistet. Dieser Katalysator kommt in Beispiel 7 zum Einsatz. Von Phasentransfer-Katalysatoren ist im Übrigen nichts in dieser Schrift offenbart.
EP 1,444,191 B1 betrifft ein Verfahren zur Umesterung von Fetten und Pflanzenölen in Gegenwart von aliphatischen Kohlenwasserstoffen als Lösungsmittel. Auf Seite 2 dieser Schrift wird der Stand der Technik abgehandelt. Hierzu wird ausgeführt, dass die Umesterung von Pflanzenölen mit Methanol eine klassische Methode für die Herstellung von Biodiesel ist. Unter Bezug auf einschlägige US-Patentschriften aus den 40-er Jahren wird festgestellt, dass die Pflanzenöle mit Methanol in Gegenwart von Kaliumhydroxid als Katalysator umgeestert werden und zwar üblicherweise für etwa 1 Stunde bei Temperaturen in der Nähe des Siedepunktes von Methanol.
Weiterhin wird in der EP 1,444,191 B1 (vergl. Seite 2, Zeilen 33-35) ausgeführt, dass Methanol und Pflanzenöle nur begrenzt ineinander mischbar sind mit der Konsequenz, dass man die zweiphasige Reaktionsmischung intensiv rührt und/oder Phasentransfer-Katalysatoren eingesetzt werden, um die Reaktion zu beschleunigen. Diese Textstelle scheint anzudeuten, dass mit der Modifikation intensiven Rührens bzw. dem Einsatz von Phasentransfer-Katalysatoren direkt an die unmittelbar zuvor abgehandelte klassische Methode in dem Sinne angeknüpft wird, dass die genannten Modifikationen zusätzliche Maßnahmen sind. Allerdings werden keine konkret geeigneten Phasentransfer-Katalysatoren, deren es eine ungeheure Vielzahl gibt, genannt.
US 6,833,463 B2 beschreibt die Umesterung von Triglyceriden mit Polyolen in Gegenwart eines basischen Initiators und eines Phasentransfer-Katalysators. Dabei werden je nach Wahl der Reaktionsbedingungen Diglyceride oder Monoglyceride der eingesetzten Polyole erhalten. Da hier ausdrücklich Polyole zur Umesterung eingesetzt werden, offenbart diese Patentschrift nichts über Fettsäureester von Monoalkoholen und somit nichts über die Herstellung von Biodiesel.

Verkrade beschreibt in Prepr. Pap.-Am. Chem. Soc., Div. Fuel Chem., 2006, 51(1), 324 die Umesterung von Sojabohnenöl in Gegenwart eines Katalysatorsystems aus einer Base (etwa Natriummethylat) und einer speziellen Phosphoniumverbindung, die bei Raumtemperatur flüssig ist. Dabei handelt es sich um eine Verbindung der Formel [R₃R'P]⁺X⁻ (mit R= Hexyl, R'= Tetradecyl und X = Dicyanamid). Es werden jedoch äußerst hohe Methanol-Überschüsse benötigt, um zu befriedigenden Umsetzungsgraden zu gelangen (ca. 30-facher molarer Überschuß an Methanol bezogen auf das Triglycerid).

Hashimoto und Watanabe (Wakayama Kogyo Koto Senmon Gakko Kenkyu Kiyo (2003), 38, 29-32; ISSN: 0287-5381; zitiert nach CAPLUS 2003:991921) beschreiben die Umesterung von gebrauchtem Speiseöl mit Methanol, 1-Propanol, 2-Propanol und 1-Butanol in Gegenwart von Natriummethoxid und Tetra-(n-Butyl)-Ammoniumbromid. Dabei wurden Umsetzungsgrade im Bereich von 62-86% erzielt. Diese Umsetzungsgrade sind für die intendierte Verwendung der Fettsäurealkylester als Biodiesel bei weitem zu gering. Das eingesetzte Katalysatorsystem ist daher als unbefriedigend einzustufen.

### Beschreibung der Erfindung

Aufgabe der vorliegenden Erfindung war es, ein Verfahren zur Umesterung von Triglyceriden mit einwertigen Alkoholen bereitzustellen, das einfach auszuführen ist und Fettsäurealkylester in hohen Ausbeuten zugänglich macht. Die so hergestellten Fettsäurealkylester sollten sich insbesondere zur Verwendung als Biodiesel eignen.

Gegenstand der Erfindung ist zunächst ein Verfahren zur Umesterung von Triglyceriden mit einwertigen Alkoholen, dadurch gekennzeichnet, dass die Umsetzung durchgeführt wird in Gegenwart (a) eines basischen Aktivators und (b) eines Phasentransfer-Katalysators, der ausgewählt wird aus der Gruppe der Benzyltrialkylammoniumsalze und der Trisalkylmethylammoniumsalze der Formel (III)

[NR⁵R⁶R⁷CH₃]+ [X]- (III)

worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und X ein Anion bedeutet; dabei gilt die Maßgabe, dass die Verbindungen (a) verschieden sind von den Verbindungen (b) und die weitere Maßgabe, dass die eingesetzten Triglyceride eine Säurezahl unterhalb von 4 aufweisen.

Das erfindungsgemäße Verfahren zur Umesterung von Triglyceriden mit einwertigen Alkoholen weist eine Reihe von Vorteilen auf
- Geringer Katalysatoreinsatz,
- niedrigere Reaktionstemperaturen und daraus resultierende Energieersparnis im Vergleich zu vielen Verfahren des Standes der Technik,
- geringe Mengen an alkalischen Co-Katalysatoren (Aktivatoren (a)) und daraus resultierend geringere Salz- und Abwassermengen,
- Einsatz einfacher und kostengünstiger Aktivatoren (a),
- geringer molarer Überschuss an einwertigem Alkohol, was über die Reduzierung des Alkohol/Triglycerid-Verhältnisses zu höheren Durchsätzen an bestehenden Anlagen, bzw. geringeren spezifischen Investitionskosten für Neuanlagen führt,
- kurze Reaktionszeiten,
- Wasseranteil in den Edukten stört die Reaktion nicht.

### Die Triglyceride

Unter Triglyceriden werden im Rahmen der vorliegenden Erfindung Verbindungen der allgemeinen Formel (I)

CH₂(O₂CR¹)-CH(O₂CR²)- CH₂(O₂CR³) (I)

verstanden, worin die Reste R¹, R²und R³ unabhängig voneinander Alkylreste mit 5 bis 23 C-Atomen bedeuten, die gesättigt oder ungesättigt, geradkettig oder verzweigt sein können. Die Triglyceride (I) können natürlichen oder synthetischen Ursprungs sein. Diese Triglyceride (I) können als reine Substanzen oder in Form von Mischungen eingesetzt werden.
Wie bereits ausgeführt, gilt die Maßgabe, dass die eingesetzten Triglyceride eine Säurezahl unterhalb von 4 aufweisen. Die Säurezahl (SZ) gibt bekanntlich die Menge an Kaliumhydroxid in mg an, die zur Neutralisation von 1 g der zu untersuchenden Probe erforderlich ist (Bestimmung gemäß der dem Fachmann bekannten Methode DIN 53402). Vorzugsweise liegt die Säurezahl unterhalb von 2 und insbesondere unterhalb von 1.

Triglyceride, die nicht die gewünschte Säurezahl aufweisen, können nicht in dem erfindungsgemäßen Verfahren eingesetzt werden, weil dann keine zufrieden stellenden Ergebnisse erzielt werden. Solche Triglyceride können jedoch einer Vorbehandlung derart unterworfen werden, dass die gereinigten Triglyceride nunmehr eine Säurezahl unterhalb von 4 aufweisen. In welcher Art und Weise eine derartige Vorbehandlung geschieht, ist nicht entscheidend. Der Fachmann kann hier an sich auf alle ihm einschlägig vertrauten Methoden zurückgreifen. Beispiele für derartige Methoden sind unter anderem:
- Raffination des rohen natürlichen Öles;
- Vorveresterung des rohen natürlichen Öles unter Einsatz eines sauren Katalysators;
- Vorbehandlung des rohen, natürlichen Öles mit Hilfe von enzymatischen Verfahren.

Die Triglyceride werden vorzugsweise in entschleimter Form eingesetzt. Dies kann auf unterschiedliche Weise geschehen, beispielsweise durch enzymatische Katalyse.

Es sei festgestellt, dass die Entschleimung eines Öles und die Reduzierung der Säurezahl (SZ) eines Öles zwei verschiedene Methoden sind, die unterschiedlichen Zwecken dienen. Die Entschleimung sorgt für die Entfernung von Schleimstoffen wie z.B. Phospholipiden, deren Anwesenheit für ein nachteiliges Prozessverhalten sorgen kann. Die Reduzierung der SZ sorgt dafür, dass physikalisch (z.B. durch Wäsche) oder chemisch (z.B. durch Reaktion mit einem Alkohol) die Menge der im Öl vorhanden freien Fettsäuren verringert wird.

Vorzugsweise werden Triglyceride natürlichen Ursprungs eingesetzt und zwar die dem Fachmann bekannten tierischen Fette und/oder pflanzliche Öle. Rapsöl, Sonnenblumenöl, Sojaöl, Kokosöl, Palmöl und Palmkernöl sind als Triglyceride ganz besonders bevorzugt.

Beim oben genannten herkömmlichen Bradshaw-Verfahren zur Umesterung von Fetten und Ölen mit Methanol und NaOH (beschrieben in den US-Patenten 2,271,619 und 2,360,844) wird ausdrücklich darauf hingewiesen, dass die Säurezahl SZ unterhalb von 1,5 sein muss. Das erfindungsgemäße Verfahren ermöglicht es demgegenüber ein breiteres Spektrum an Triglyceriden einzusetzen, da die Säurezahl des Triglycerids lediglich unterhalb von 4 sein muss und vorzugsweise 2 oder weniger beträgt. Dies ist ein weiterer Vorteil des erfindungsgemäßen Verfahrens.

### Die einwertigen Alkohole

Die im Rahmen der vorliegenden Erfindung einzusetzenden einwertigen Alkohole sind ihrer Natur nach an sich nicht beschränkt. Vorzugsweise setzt man jedoch einwertige Alkohole der allgemeinen Formel (II) ein

R⁴-OH (II)

worin der Rest R⁴ einen Alkylrest mit 1 bis 24 C-Atomen bedeutet, der gesättigt oder ungesättigt, geradkettig oder verzweigt sein kann. Gesättigte Alkohole mit 1 bis 8 C-Atomen sind besonders bevorzugt. Beispiele für derartige Alkohole sind Methanol, Ethanol, n-Propanol, i-Propanol, n-Butanol, n-Pentanol, n-Hexanol, n-Heptanol, n-Octanol, 2-Ethyl-1-hexanol. Methanol, Ethanol, Propanol und Isopropanol sind als einwertige Alkohole ganz besonders bevorzugt.

### Die basischen Aktivatoren (a)

Als basische Aktivatoren werden im Rahmen der vorliegenden Erfindung ganz allgemein solche basischen Verbindungen eingesetzt, die geeignet sind, die Umesterung von Triglyceriden mit einwertigen Alkoholen zu Fettsäurealkylestern zu beschleunigen. Beispiele geeigneter Verbindungen (a) sind anorganische und organische Basen, etwa Metallhydroxide, -oxide, -carbonate oder -alkoxide. Dabei ist die grundsätzliche Bedingung zu beachten, dass die Verbindungen (a) verschieden von den Verbindungen (b) sein müssen.
In einer bevorzugten Ausführungsform wird der basische Aktivator (a) ausgewählt aus der Gruppe der Hydroxide, Oxide, Carbonate oder Alkoxide von Alkali- oder Erdalkalimetallen. Dabei sind Natriumhydroxid, Kaliumhydroxid, Natriummethoxid, Kaliummethoxid, Natriumcarbonat und Kaliumcarbonat ganz besonders bevorzugt. Diese Substanzen können in fester Form oder als wässrige oder alkoholische Lösung eingesetzt werden.
Der Verbindungen (a) werden in katalytischen Mengen eingesetzt. Die Menge hängt dabei von der Aktivität und Stabilität des Katalysators bei den gewählten Reaktionsbedingungen ab und ist der jeweiligen Reaktion anzupassen. Die Menge der Verbindungen (a) kann dabei zwischen 0,001 und 10 Mol-% - bezogen auf das eingesetzte Triglycerid - variieren und liegt besonders bevorzugt im Bereich von 0,01 bis 5 Mol-%.

### Die Phasentransferkatalysatoren (b)

Als Phasentransferkatalysatoren (b) werden im Rahmen der vorliegenden Erfindung solche eingesetzt, die ausgewählt werden aus der Gruppe der Benzyltrialkylammoniumsalze und der Trisalkylmethylammoniumsalze der Formel (III)

[NR⁵R⁶R⁷CH₃]+ [X]- (III)

worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und X ein Anion bedeutet. Diese Verbindungen können einzeln oder im Gemisch untereinander eingesetzt werden. Ebenso können zur einfacheren Dosierung Lösungen der Katalysatoren eingesetzt werden. Als Lösemittel kommen hier insbesondere Wasser oder Alkohole, Öl oder aromatische Kohlenwasserstoffverbindungen wie z.B. Xylol zum Einsatz
Hinsichtlich der Natur der Anionen ist die vorliegende Erfindung an sich nicht beschränkt. So können etwa Halogenide (Cl, Br, I), Halogenostannate, Halogenoaluminate, Hexafluorophosphate, Tetrafluoroborate, Tetrahydridoborate, Sulfate, Alkylsulfate, Hydrogensulfate, Carbonate als Anionen zur Anwendung kommen. Vorzugsweise setzt man jedoch als Anionen Halogenide (Chlorid, Bromid, Iodid), Sulfate, Hydrogensulfate oder Alkylsulfate ein.

Vorzugsweise setzt man im Rahmen des erfindungsgemäßen Verfahrens Trisalkylmethylammoniumsalze der Formel (III-a) als Verbindungen (b) ein

[NR⁵R⁶R⁷CH₃]+ [Y]- (III-a)

worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und Y ein Halogenid-Anion oder ein Sulfat-Anion oder ein Hydrogensulfat-Anion oder ein Alkylsulfat-Anion der Formel [R⁸SO₄]⁻ ist, worin R⁸ ein Alkylrest mit 1 bis 12 C-Atomen ist. In einer Ausführungsform ist X dabei ein Chlorid-Anion. In einer anderen Ausführungsform ist Y ein Anion ausgewählt aus der Gruppe 2-Ethylhexylsulfat, Octylsulfat und Decylsulfat.

Ganz besonders bevorzugt als Phasentransferkatalysator ist Tri(octyl/decyl)methylammoniumchlorid, das kommerziell unter der Bezeichnung Aliquat 336 bzw. Aliquat 134 erhältlich ist (Hersteller: Fa. Cognis). Ein weiterer bevorzugter Phasentransferkatalysator ist Tributylmethylammoniumchlorid, das unter der Bezeichnung Aliquat 175 (Hersteller: Fa. Cognis) erhältlich ist.

Die Phasentransferkatalysatoren (b) werden in katalytischen Mengen eingesetzt. Die Menge hängt dabei von der Aktivität und Stabilität des Katalysators bei den gewählten Reaktionsbedingungen ab und ist der jeweiligen Reaktion anzupassen. Die Menge der Phasentransferkatalysatoren (b) kann dabei zwischen 0,001 und 10 Mol-% - bezogen das eingesetzte Triglycerid - variieren und liegt besonders bevorzugt im Bereich von 0,01 bis 5 Mol-%.

### Durchführung des Verfahrens

Bei der Durchführung des erfindungsgemäßen Verfahrens wird die Reaktionsmischung vorzugsweise gerührt. Die bevorzugte intensive Durchmischung der Reaktionsmischung kann aber auch durch andere dem Fachmann geläufige Methoden erreicht werden.

Die Reaktionszeit wird vorzugsweise im Bereich von 1 bis 60 Minuten gewählt. Dabei werden Umsetzungsgrade von mindestens 98%, vorzugsweise mindestens 99% erreicht. Der Umsetzungsgrad der Reaktion bezieht sich auf den nach dem Ende oder dem Abbruch der Reaktion noch vorhanden Anteil an Glyceriden (= Summe von Tri-, Di- und Monoglyceriden) bezogen auf den Anfangsgehalt dieser Komponenten im eingesetzten Öl oder Fett. Der Umsatzgrad lässt sich in einfacher Weise gaschromatographisch bestimmen und errechnet sich aus den GC-Flächen der Methylester geteilt durch die Summe der GC-Flächen von Methylestern plus Glyceriden.

In dem erfindungsgemäßen Verfahren reichen in der Regel bereits sehr kurze Reaktionszeiten von wenigen Minuten, um Umsetzungsgrade oberhalb 98% zu erreichen. Im Beispielteil wird belegt, dass typischerweise bereits nach 5 Minuten Umsetzungsgrade größer 99,9% erreicht werden, zumindest wenn die Säurezahl des Rohstoffes 2 oder weniger beträgt.

Die nach dem erfindungsgemäßen Verfahren erhältlichen Fettsäurealkylester können als Biodiesel verwendet werden. Laut Spezifikation in DIN EN 14214 darf Biodiesel maximal 0,2% Triglyzeride nach Prüfverfahren PR EN 14105 enthalten. Es ist in diesem Zusammenhang besonders wichtig, sehr hohe Umsätze von >99,8% innerhalb kurzer Zeit zu erreichen.

Bei herkömmlichen Umesterungsverfahren, die äquimolare Mengen NaOH, jedoch keine Phasentransferkatalysatoren einsetzen, werden Umsetzungsgrade der Größenordnung > 99,8% erst nach mehr als 20 Minuten erzielt. Eine Erhöhung der NaOH-Konzentration zur Steigerung der Reaktionsgeschwindigkeit bei diesen herkömmlichen Umesterungsverfahren ist nicht wünschenswert, da NaOH in Triglyzeriden mit einem Gehalt an freien Fettsäuren dazu neigt, Seifen zu bilden, die einerseits Produktverluste bewirken und auch emulgierend wirken. Eine Phasentrennung nach beendeter Reaktion zur Trennung der Methylesterphase und Glyzerinphase wird dadurch erschwert bzw. verhindert. Eine Aufarbeitung des Produktes ist dann nur schwer möglich.
Im Gegensatz zu den herkömmlichen Umesterungsverfahren lassen sich die für den Einsatz als Biodiesel wünschenswerten hohen Umsätze (> 99,8%) durch das erfindungsgemäße Verfahren bereits nach weniger als 5 Minuten erreichen.

Eine Steigerung der Reaktionsgeschwindigkeit kann bei herkömmlichen Umesterungsverfahren von Triglyceriden durch eine Erhöhung des Methanolüberschusses erreicht werden. Überschüssiges Methanol muss aber aus dem Produkt abdestilliert werden. Der Grenzwert für Methanol nach DIN EN 14214 beträgt für Methanol 0,2% (m/m). Da Methanol eine sehr hohe Verdampfungsenthalpie aufweist, führt dieses zu sehr hohen Herstellkosten.
Im Gegensatz dazu werden beim erfindungsgemäßen Verfahren nur moderate Mengen an einwertigen Alkoholen, z.B. Methanol, benötigt.

Es ist bekannt, dass bei Verwendung von Ethanol anstelle von Methanol bei klassischen Umesterungsverfahren von Triglyceriden (wie etwa nach Bradshaw) deutlich niedrigere Reaktionsgeschwindigkeiten beobachtet werden.
Im Gegensatz dazu kann beim erfindungsgemäßen Verfahren ohne weiteres Ethanol eingesetzt werden, ohne dass eine merkliche Verlangsamung der Reaktionsgeschwindigkeit eintritt. Mit anderen Worten: Auch mit Ethanol werden beim erfindungsgemäßen Verfahren sehr hohen Umsätzen erreicht.

Das erfindungsgemäße Verfahren kann batchweise oder kontinuierlich (z.B. in einem Rohrreaktor, Rührkessel, Rührkesselkaskade, oder andere dem Fachmann bekannten Verfahren) durchgeführt werden.

Die Temperatur, bei der die Umesterung durchgeführt wird, ist an sich nicht kritisch. Die Reaktion wird so durchgeführt, dass das Reaktionsgemisch aus Triglycerid, einwertigem Alkohol, Aktivator (a) und Phasentransferkatalysator (b) in flüssiger Form vorliegt. Sofern möglich arbeitet man vorzugsweise bei Temperaturen im Bereich von 30 bis 150 °C, insbesondere bei 50-80 °C, und ganz besonders bei 60 bis 70 °C. Vorzugsweise wählt man die Temperatur so niedrig wie möglich, wodurch erreicht wird, dass die Farbqualität der Zielprodukte (also der Fettsäurealkylester) erhöht wird. Wenn die Farbe des Produktes nicht kritisch ist, wählt man die Reaktionstemperatur so, dass eine möglichst hohe Reaktionsgeschwindigkeit erreicht wird. Bei relativ hohen Temperaturen (im Bereich des Siedepunktes des Alkohols) ist es zweckmäßig, verdampfenden Alkohol zu kondensieren und ins Reaktionsgemisch zurückzuführen oder entsprechend der Temperatur den Druck so zu wählen, dass keine signifikante Verdampfung des Alkohols beobachtet wird.
Die Reaktion kann gewünschtenfalls durch eine geeignete Temperaturführung deutlich verlangsamt und auch durch Einstellen einer Temperatur unterhalb von 30°C unterbrochen werden. Nach Erhöhung der Temperatur auf einen Wert oberhalb dieser Grenze kann die Reaktion danach wieder aufgenommen werden.

Vorzugsweise stellt man bei dem erfindungsgemäßen Verfahren ein molares Verhältnis (einwertiger Alkohol : Triglycerid) im Bereich von 3:1 bis 20:1 ein. Ein Verhältnis von 4:1 bis 8:1 ist dabei ganz besonders bevorzugt.

Der Druck ist an sich nicht kritisch, besonders bevorzugt ist es jedoch, die Reaktion im Druckbereich zwischen Umgebungsdruck und einem Druck von 2 bar (gemeint ist ein Druck von 2 bar absolut und nicht ein Druck von 2 bar über Umgebungsdruck) durchzuführen.
Bei dem geschilderten erfindungsgemäßen Verfahren entstehen als Zielprodukte der Umesterung die Ester der aus den Triglyceriden stammenden Carbonsäuren mit den einwertigen Alkoholen. Diese Ester werden nachfolgend der Einfachheit halber als Fettsäurealkylester bezeichnet.

Die Reaktionsmischung kann auf unterschiedliche Weise aufgearbeitet werden. Nachdem man die Umesterung bis zum gewünschten Umsetzungsgrad, vorzugsweise bis 98% oder höher durchgeführt hat, bilden sich in der Regel je eine Fettsäurealkylester- und eine Glycerin-Phase, die vom Fachmann durch bekannte Verfahrensschritte wie beispielsweise Dekantieren leicht getrennt werden können. Je nach den gewählten Eigenschaften des Phasentransferkatalysators findet sich dieser in der Fettsäurealkylester- oder Glycerin-Phase wieder und kann aus dieser Phase abgetrennt werden. Diese Katalysatorabtrennung kann durch dem Fachmann bekannte Verfahren (z.B. Destillation, Extraktion, Absorption, Adsorption, Kristallisation, Membranverfahren, Einschluss des Katalysators in Micellen nebst anschließender Abtrennung usw.) erzielt werden, und bietet den Vorteil, dass auf diese Weise der Katalysator zurück gewonnen und erneut eingesetzt werden kann. Dieser Umstand trägt zur erhöhten Wirtschaftlichkeit des erfindungsgemäßen Verfahrens bei und stellt einen Vorteil gegenüber bereits bekannten Verfahren dar. Je nach Verwendungszweck der gewonnenen Produkte kann auf die Aufarbeitung der Methylester- und Glycerin-Phase auch verzichtet werden.

In einer Ausführungsform belässt man den eingesetzten Katalysator im Fettsäurealkylester. In einer anderen Ausführungsform entfernt man den Katalysator aus dem Fettsäurealkylester, beispielsweise durch Adsorption mittels Bleicherde oder durch Destillation.

In einer Ausführungsform des Verfahrens wird der eingesetzte Phasentransfer-Katalysator anschließend zurückgeführt. Dazu wird die Methylesterphase nach Phasentrennung destilliert und der Rückstand vollständig oder teilweise in den Prozess zurückgeführt.
Wird die Methylesterphase oder Glyzerinphase adsorptiv vom Katalysator befreit, kann der Katalysator vom Adsorber eluiert und in den Prozess zurückgeführt werden. Als Eluenten nimmt man dabei besonders bevorzugt den Alkohol, das Öl oder Fett oder einen entsprechenden Ester. Der Adsorber könnte auch ohne Elution mit verminderter Aktivität des Katalysators in den Prozess zurückgeführt werden.

Je nach intendierter Aufarbeitung der Reaktionsmischung kann es gewünscht sein, eher hydrophile oder lipophile Phasentransfer-Katalysatoren bei der Umesterung einzusetzen. Die Wahl des konkret geeigneten Phasentransfer-Katalysators kann von verschiedenen Faktoren abhängen, u. a. vom Verwendungszweck der Zielprodukte (also der Fettsäurealkylester).
Setzt man beispielsweise zur Umesterung von Triglyceriden mit Methanol die vom Anmelder kommerziell angebotenen Phasentransfer-Katalysatoren Aliquat 336 bzw. Aliquat 134 ein, so verbleiben diese Katalysatoren nach der Phasentrennung überwiegend in der Methylester-reichen Phase. Man erhält so eine nahezu PTC-freie Glyzerin-Phase. Setzt man Aliquat 175 (Cognis) ein, verbleibt dieser Katalysator nach der Phasentrennung überwiegend in der Glyzerin-reichen Phase und die Methylesterphase ist nahezu PTC frei.

Ein weiterer Erfindungsgegenstand ist die Verwendung der nach dem Verfahren erhältlichen Fettsäurealkylester als Biodiesel (z.B. nach Spezifikation DIN EN 14214).

### Beispiele

Die vorliegende Erfindung wird durch die nachfolgenden Vergleichsbeispiele und Beispiele illustriert:

### 1. Vergleichsbeispiele

### Vergleichsbeispiel 1

### Umesterung von Rapsöl (SZ=0,3) ohne Aktivator (NaOH) und ohne Phasentransfer-Katalysator (PTC)

In einen Reaktionskolben mit Rückflusskühler wurden 265,9g raffiniertes Rapsöl (SZ=0,3) und 56,5g Methanol (Merck) bei 65°C eingefüllt. Die Zugabe des Methanols wurde als t₀ definiert. Nach 5, 20, 40, und 60 min wurde eine Probe genommen und diese sehr schnell mit Eis abgekühlt. Die Reaktion kam durch diese Maßnahme praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methanolreich war und die untere Phase nahezu vollständig aus Triglyzeriden bestand. Es war keine Umesterungsreaktion zu beobachten. Auch nach 1 Stunde war kein Methylester nachweisbar.

**Ergebnis:**

| Zeit | Umsatz |
|---|---|
| min | % |
| 5 | 0,00 |
| 20 | 0,00 |
| 40 | 0,00 |
| 60 | 0,00 |

### Vergleichsbeispiel 2

### Umesterung von Rapsöl (SZ=0,3) mit Aktivator (NaOH), jedoch ohne PTC

In einen Reaktionskolben mit Rückflusskühler wurden 265,9g raffiniertes Rapsöl (SZ=0,3), 56,5g Methanol (Merck) und 1,8g festes NaOH (Merck) bei 65°C eingefüllt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Es entstand rasch Methylester, nach 10 min war jedoch noch ein signifikanter Anteil Triglyzerid in der Reaktionslösung zu finden.

**Ergebnis:**

| Zeit | Umsatz |
|---|---|
| min | % |
| 5 | 99,57 |
| 20 | 99,77 |
| 40 | >99,9 |
| 60 | >99,9 |

### Vergleichsbeispiel 3

### Umesterung von Rapsöl (SZ=0,3) ohne Aktivator (NaOH), jedoch mit PTC (Aliquat 336)

In einen Reaktionskolben mit Rückflusskühler wurden 265,9g raffiniertes Rapsöl (SZ=0,3), 3,9g Aliquat 336 (Cognis) und 56,5g Methanol (Merck) bei 65°C eingefiillt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methanolreich und die untere Phase reich an Triglyzeriden war. Der PTC verblieb dabei überwiegend in der Methylesterphase. Es entstand dabei kein Methylester.

**Ergebnis:**

| Zeit | Umsatz |
|---|---|
| min | % |
| 5 | 0,00 |
| 20 | 0,00 |
| 40 | 0,00 |
| 60 | 0,00 |

### Vergleichsbeispiel 4

### Umesterung von Rapsöl (SZ=1) mit NaOH und mit PTC (Aliquat 100)

In einen Reaktionskolben mit Rückflusskühler wurden 265,9g raffiniertes Rapsöl mit einer SZ von 0,3, dessen SZ durch Zugabe von Canola-Spaltfettsäure auf einen Wert von 1,0 eingestellt worden war, 1,8g festes NaOH (Merck), 3,8g Aliquat 100 (Tetrabutylammoniumbromid, 50% in Wasser; Cognis) und 56,5g Methanol (Merck) bei 65°C eingefüllt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Der PTC verblieb dabei überwiegend in der Methylesterphase.

**Ergebnis:**

| Zeit | Umsatz |
|---|---|
| min | % |
| 5 | 93,21 |
| 20 | 95,80 |
| 40 | 96,35 |
| 60 | 97,55 |

Auch nach 60 min Reaktionszeit waren noch 2,33% Triglyzerid in der Reaktionslösung nachweisbar. Die mit Aliquat 100 erzielten Ergebnisse sind mithin deutlich schlechter als diejenigen, die mit den erfindungsgemäß einzusetzenden Phasentransfer-Katalysatoren erzielt werden.

### 2. erfindungsgemäße Beispiele

### Beispiel 1

### Umesterung von Rapsöl (SZ=0,3) mit NaOH und mit PTC (Aliquat 336)

In einen Reaktionskolben mit Rückflusskühler wurden 265,9g raffiniertes Rapsöl (SZ=0,3), 1,8g festes NaOH (Merck), 3,9g Aliquat 336 (Cognis) und 56,5g Methanol (Merck) bei 65°C eingefüllt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wird der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Der PTC verblieb dabei überwiegend in der Methylesterphase. Bereits in der nach 5 min entnommenen Probe ließ sich kein Triglyzerid mehr nachweisen.

**Ergebnis:**

| Zeit | Umsatz |
|---|---|
| min | % |
| 5 | >99,9 |
| 20 | >99,9 |
| 40 | >99,9 |
| 60 | >99,9 |

### Beispiel 2

### Umesterung von Rapsöl (SZ=0,3) mit NaOH und mit PTC (Aliquat 336)

In einen Reaktionskolben mit Rückflusskühler wurden 265,9g raffiniertes Rapsöl (SZ= 0,3), 1,8g festes NaOH (Merck), 3,9g Aliquat 336 (Cognis) und 56,5g Methanol (Merck) bei 65°C eingefüllt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Der PTC verblieb dabei überwiegend in der Methylesterphase.

**Ergebnis:**

| Zeit | Umsatz |
|---|---|
| min | % |
| 5 | >99,9 |
| 20 | >99,9 |
| 40 | >99,9 |
| 60 | >99,9 |

### Beispiel 2a (Variation SZ)

### Umesterung von Rapsöl (SZ=1,0) mit NaOH und mit PTC (Aliquat 336)

Beispiel 2 wurde wiederholt, dabei wurde jedoch die Säurezahl des eingesetzten Rapsöls gezielt durch Zugabe von Canola-Spaltfettsäure auf einen Wert von 1,0 erhöht. Der Umsatz war im vorliegenden Beispiel 2a praktisch identisch mit dem gemäß dem oben ausgeführten Beispiel 2.

### Beispiel 2b (Variation SZ)

### Umesterung von Rapsöl (SZ=2,0) mit NaOH und mit PTC (Aliquat 336)

Beispiel 2 wurde wiederholt, dabei wurde jedoch die Säurezahl des eingesetzten Rapsöls gezielt durch Zugabe von Canola-Spaltfettsäure auf einen Wert von 2,0 erhöht. Der Umsatz war im vorliegenden Beispiel 2b praktisch identisch mit dem gemäß dem oben ausgeführten Beispiel 2.

### Beispiel 2c (Variation SZ)

### Umesterung von Rapsöl (SZ=4,0) mit NaOH und mit PTC (Aliquat 336)

Beispiel 2 wurde wiederholt, dabei wurde jedoch die Säurezahl des eingesetzten Rapsöls gezielt durch Zugabe von Canola-Spaltfettsäure auf einen Wert von 4,0 erhöht. Der Umsatz war im vorliegenden Beispiel 2b praktisch identisch mit dem gemäß dem oben ausgeführten Beispiel 2.

**Ergebnis:**

| Zeit | Umsatz |
|---|---|
| min | % |
| 5 | 98,51 |
| 20 | 98,77 |
| 40 | 99,31 |
| 60 | 99,42 |

Bei einer SZ von waren nach 60 min Reaktionszeit noch 0,55% Triglyzerid in der Reaktionslösung nachweisbar. Die Reaktionsgeschwindigkeit war also niedriger als in den Beispielen 2, 2a und 2b.

### Beispiel 3

### Umesterung von Rapsöl (SZ=1,0) mit NaOH und mit PTC (Aliquat 175)

In einen Reaktionskolben mit Rückflusskühler wurden 265,9g raffiniertes Rapsöl mit einer SZ von 0,3, dessen SZ durch Zugabe von Canola-Spaltfettsäure auf einen Wert von 1,0 eingestellt worden war, 1,8g festes NaOH (Merck), 3,8g Aliquat 175 (Tributylmethylammoniumchlorid, 75% in Wasser; Cognis) und 56,5g Methanol (Merck) bei 65°C eingefüllt. Die Zugabe des Methanols wurde als t₀ definiert. Nach 5, 20, 40, und 60 min wurde eine Probe genommen und sehr schnell mit Eis abgekühlt. Die Reaktion kam dann praktisch zum Erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Der PTC verblieb dabei überwiegend in der Methylesterphase.

**Ergebnis:**

| Zeit | Umsatz |
|---|---|
| min | % |
| 5 | >99,9 |
| 20 | >99,9 |
| 40 | >99,9 |
| 60 | >99,9 |

### Beispiel 4

### Umesterung von Rapsöl (SZ=0,3) mit NaOH und mit PTC (Aliquat 336)

In einen Reaktionskolben mit Rückflusskühler wurden 265,9g raffiniertes Rapsöl (SZ=0,3), 1,8g festes NaOH (Merck), 3,9g Aliquat 336 (Cognis) und 81,3g Ethanol (Merck) bei 65°C eingefüllt. Die Zugabe des Ethanols wurde als t₀ definiert. Nach 5, 20, 40, und 60 min wurde eine Probe genommen und sehr schnell mit Eis abgekühlt. Die Reaktion kam dann praktisch zum erliegen. Danach wurde der Umsatz jeder Probe mittels GC-Analytik bestimmt. Nach Reaktionsende wurde die zweiphasige Reaktionslösung nach raschem Abkühlen in einen Scheidetrichter überführt. Es bildeten sich zwei flüssige Phasen aus, wobei die obere Phase Methylesterreich und die untere Phase Glyzerinreich reich war. Der PTC verbliebt dabei überwiegend in der Methylesterphase.

**Ergebnis:**

| Zeit | Umsatz |
|---|---|
| min | % |
| 5 | >99,9 |
| 20 | >99,9 |
| 40 | >99,9 |
| 60 | >99,9 |

## Patentansprüche

1. Verfahren zur Umesterung von Triglyceriden mit einwertigen Alkoholen, **dadurch gekennzeichnet, dass** die Umsetzung durchgeführt wird in Gegenwart
(a) eines basischen Aktivators und (b) eines Phasentransfer-Katalysators, der ausgewählt wird aus der Gruppe der Benzyltrialkylammoniumsalze und der Trisalkylmethylammoniumsalze der Formel (III)
[NR⁵R⁶R⁷CH₃]+ [X]- (III)
worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und X dabei gilt die Maßgabe, dass die Verbindungen (a) verschieden sind von den Verbindungen (b) und die weitere Maßgabe, dass die eingesetzten Triglyceride eine Säurezahl unterhalb von 4 aufweisen.

2. Verfahren nach Anspruch 1, wobei der basische Aktivator (a) ausgewählt wird aus der Gruppe der Hydroxide, Oxide, Carbonate oder Alkoxide von Alkali- oder Erdalkalimetallen.

3. Verfahren nach Anspruch 2, wobei der basische Aktivator (a) ausgewählt wird aus der Gruppe NaOH, KOH, NaHCO₃, Na₂CO₃, KHCO₃, K₂CO₃, NaOCH₃ und KOCH₃.

4. Verfahren nach einem der Ansprüche 1 bis 3, wobei der Phasentransferkatalysator (b) ein Trisalkylmethylammoniumsalze der Formel (III-a) ist
[NR⁵R⁶R⁷CH₃]+ [Y]- (III-a)
worin die Reste R⁵ bis R⁷ unabhängig voneinander Alkylreste mit 4 bis 18 C-Atomen und insbesondere 4 bis 12 C-Atomen, sind, die geradkettig oder verzweigt, gesättigt oder ungesättigt sein können und Y ein Halogenid-Anion oder ein Sulfat-, Hydrogensulfat- oder Alkylsulfat-Anion der Formel [R⁸SO₄] ist, worin R⁸ ein Alkylrest mit 1 bis 12 C-Atomen ist.

5. Verfahren nach Anspruch 4, wobei man als Phasentransferkatalysator (b) Tri(octyl/decyl)methylammoniumchlorid oder Tributylmethylammoniumchlorid einsetzt.

6. Verfahren nach Anspruch 5, wobei man den Phasentransferkatalysator (b) als Lösung in Wasser, Alkohol oder einem anderen Lösemittel einsetzt.

7. Verfahren nach einem der Ansprüche 1 bis 6, wobei man als einwertigen Alkohol Methanol, Ethanol, Propanol und Isopropanol einsetzt.

8. Verfahren nach einem der Ansprüche 1 bis 7, wobei man als Triglycerid Rapsöl, Sonnenblumenöl, Sojaöl, Kokosöl, Palmöl oder Palmkernöl einsetzt.

9. Verfahren nach einem der Ansprüche 1 bis 8, wobei man einen Umsetzungsgrad von mindestens 99,8% einstellt.

10. Verfahren nach einem der Ansprüche 1 bis 9, wobei man den Katalysator und das Produkt durch Adsorption voneinander trennt und den Katalysator wieder in die Umesterung zurückführt.

11. Verfahren nach einem der Ansprüche 1 bis 9, wobei man den Katalysator und das Produkt durch Destillation voneinander trennt und der Katalysator wieder in die Umesterung zurückführt.

12. Verfahren nach einem der Ansprüche 1 bis 11, wobei die eingesetzten Triglyceride eine Säurezahl von 2 oder weniger aufweisen.

13. Verfahren nach Anspruch 12, wobei die Reaktionszeit 5 Minuten oder weniger beträgt.

14. Verwendung der nach dem Verfahren gemäß einem der Ansprüche 1 bis 13 erhältlichen Fettsäurealkylester als Biodiesel.
